# EUROPEAN PATENT APPLICATION

(11) **EP 3 839 475 A1**
(43) Date of publication of application: **23.06.2021**
(21) Application number: 19383154.2
(22) Date of filing: 19.12.2019
(51) Int. Cl.: G01N 3/08, G01N 3/20, G01N 3/28

(54) **METHOD AND INSTALLATION FOR MATERIAL DEFORMATION**

(71) Applicant: FAGOR ARRASATE, S.COOP., 20500 ARRASATE - MONDRAGON (ES)
(72) Inventor: ARMENDARIZ HUICI, Alain, 20500 ARRASATE (ES); GARITANO ALUSTIZA, Julen, 20500 ARRASATE (ES); BIKANDI BIKANDI, Mikel, 20500 ARRASATE (ES); BARRASA ARTAMENDI, Ekaitz, 20500 ARRASATE (ES); GALDOS ERRASTI, Lander, 20500 ARRASATE (ES); TRINIDAD NARANJO, Javier, 20500 ARRASATE (ES)
(74) Representative: Igartua, Ismael

(57) **Abstract**

The invention relates to a method and installation for material deformation, in which the material (1) to be deformed and said material (1) is subsequently deformed. Prior to deformation, upper and lower securing of the supplied material (1) around a testing area (1.0) of said material (1) is performed; controlled pressure is applied on the testing area (1.0) of the material (1) by means of a punch (2) until at least fracturing the material (1) in said testing area (1.0); and a load-movement curve of said material (1) is determined. The deformation of the material (1) is performed once the load-movement curve is obtained, and said material (1) is deformed considering said curve.

## Description

### TECHNICAL FIELD

The present invention relates to methods and installations for material deformation.

### PRIOR ART

Several methods for material deformation are used today, such bending the material, leveling the material, press forming the material, or drawing the material. In all of these methods, the shape and/or properties of the material are changed, and this is why they are referred to as methods for material deformation. These methods comprise at least a supply step, in which the material to be deformed is supplied, and a deformation step, in which said material is deformed.

To perform deformation, deformation devices adapted to each case are used. For example, a bending press is used for bending the material, a set of stamps are used for drawing or press forming the material, or a leveler is used for leveling the material.

ES2259529A1 discloses a leveler adapted for leveling the material. This document discloses a measurement plate for detecting the deformation being caused by the leveler on the material, and rollers which performing leveling are calibrated depending on this detection. This requires continuous calibration, and for each material to be leveled, the starting point is furthermore unknown.

In some cases, the material supplier is who transmits the properties of the material to be deformed to the user of the machine. The supplier uses the method deemed appropriate for determining those properties. In these cases, the starting point is a known range. However, this information may not always be available when a material is received, which makes it necessary to adjust the deformation device according to the user's experience and/or according to other known manners, such as that described in ES2259529A1, for example, which are solutions that are specific for the type of deformation to be performed.

### DISCLOSURE OF THE INVENTION

The object of the invention is to provide a method and installation for material deformation, as defined in the claims.

A first aspect of the invention relates to a method for material deformation. The method comprises a supply step in which the material to be deformed is supplied, and a deformation step in which said material is deformed.

The method further comprises a determination step prior to the deformation step, in which:
- upper and lower securing of the supplied material around a testing area of said material is performed,
- a punch is moved in a controlled manner in an actuation direction towards the testing area, such that said punch exerts a force or load on said testing area as it continues to move in said actuation direction once it contacts with said testing area, and deforms at least part of said testing area, said movement of the punch being caused at least until the material fractures in said testing area, and
- a load-movement curve of said material from the time the punch contacts with the material in the testing area until said material fractures is determined, depending on the movement of the punch in the forward movement direction and on the force exerted by said punch on the material during said movement.

In the method, the deformation step is furthermore executed once the load-movement curve of the material has been obtained, and said material is deformed, in said deformation step, considering said load-movement curve.

A load-movement curve of a material is known to represent the elastic,, plastic, and breaking (or fracture) properties of said material, i.e., through the load-movement curve of a material it is possible to know the degree of deformation that the material can withstand while still being able to recover its shape after deformation (elastic limit), where it is known that after that point, because of its plastic properties, the material cannot fully recover its shape after deformation. With said load-movement curve it is also possible to know the degree of deformation that said material can withstand before fracturing (fracture limit).

Therefore, with the proposed method, the material is deformed in the deformation step taking into account its curve load-deformation, and depending on the required deformation, a determined deformation of said material can be caused to obtain said required deformation taking said curve into account. For example, if the required deformation is outside the elastic limit, the curve allows estimating what part of the shape the material to be deformed will try to recover, and the necessary deformation will be applied on said material so that, after recovering said part of its shape, the resulting deformation is equal to the required deformation.

Therefore, with the proposed method suitable deformation can be obtained in a simpler manner and with a lower risk of obtaining an erroneous resulting deformation which would lead to having to discard or reprocess the deformed material. Furthermore, the determination of the load-movement curve allows obtaining the properties of the material regardless of the type of deformation to be performed on it, where said determination can be applied in the deformation step, whatever the type of deformation to be applied, thus obtaining a flexible method that is applicable for any type of deformation.

A second aspect of the invention relates to an installation for material deformation. The installation comprises a feeder adapted for supplying the material to be deformed, a deformation device adapted for deforming said supplied material, and a control device configured for controlling at least the actuation of the deformation device on said material.

The installation further comprises a tool with a lower die adapted for supporting the material, a lower die facing the lower die, and a punch that is movable with respect to at least the upper die in the actuation direction. At least one of the dies is configured for moving towards the other die in a given direction so as to collaborate with the other die and keep the material secured as a result of said collaboration. The control device is configured for causing the controlled movement of the punch towards the material in an actuation direction.

Both dies comprise a respective hole, which holes are aligned in the actuation direction, such that the material comprises a testing area which coincides with said holes and is free of the pinching of said dies when both dies cooperate with one another and secure said material. The punch is configured for moving along the inside of at least one of said holes of the dies towards the testing area of the material, such that it exerts a force or load on said testing area of said material, when it contacts with said testing area, and said force increases as the punch continues to move in said actuation direction.

The control device is furthermore configured for causing the forward movement of the punch until causing at least the fracture of the material in the testing area as a result of the actuation of said punch on said testing area, for determining a load-movement curve of said material during said actuation of said punch, depending on the force and of the movement of said punch, and for causing the deformation device to deform said material depending on said determined load-movement curve. The advantages described for the method are also obtained with the installation of the invention.

These and other advantages and features of the invention will become evident in view of the drawings and detailed description of the invention.

### DESCRIPTION OF THE DRAWINGS

Figure 1 shows a tool of one embodiment of an installation of the invention, used for determining a load-movement curve of a material.
Figure 2 shows a generic load-movement curve of a material.
Figure 3 shows an embodiment of an installation of the invention, with a tool that is used for determining a load-movement curve of a material.

### DETAILED DISCLOSURE OF THE INVENTION

A first aspect of the invention relates to a method for material deformation. The method comprises a supply step in which the material 1 to be deformed is supplied, and a deformation step in which said material 1 is deformed.

The method further comprises a determination step prior to the deformation step, in which a load-movement curve of said material 1 is determined. Said load-movement curve represents the properties of said material 1, as described above.

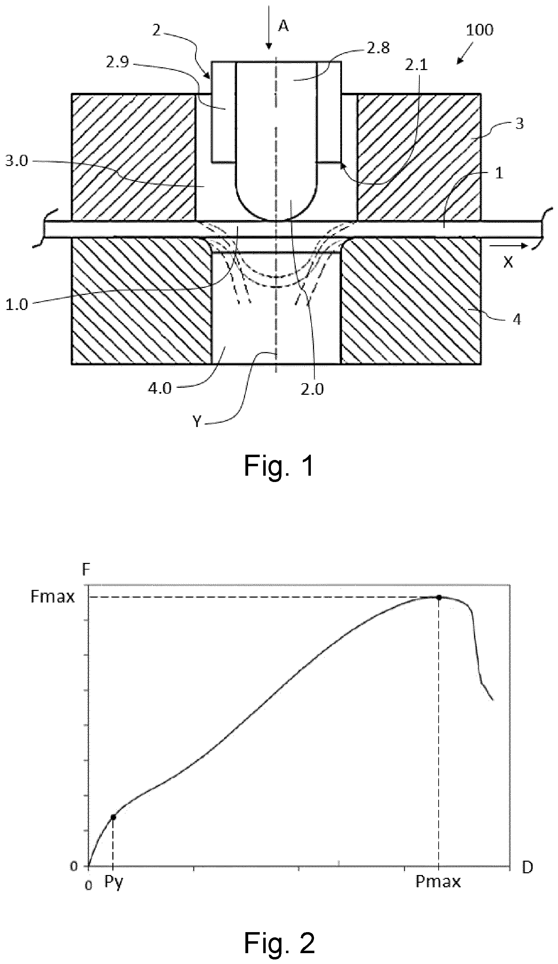

To that end, at least the following steps are carried out in the determination step:
- upper and lower securing of the supplied material 1 around a testing area 1.0 of said material 1 is performed, such that said material is secured (at the top and bottom) around said testing area 1.0, which is not secured as depicted in Figure 1;
- a punch 2 is moved in a controlled manner in an actuation direction A towards the testing area 1.0, with the material 1 thus secured, such that said punch 2 exerts a force F or load on said testing area 1.0 as it continues to move in said actuation direction A once it contacts with said testing area 1.0, and deforms at least part of said testing area 1.0, furthermore causing said movement of the punch 2 to be prolonged at least until the material 1 fractures in said testing area 1.0; and
- the load-movement curve of said material 1, such as that depicted by way of example in Figure 2, from the time the punch 2 contacts with the material in the testing area 1.0 until said material fractures is determined, depending on the movement D of said punch 2 in the forward movement direction A (or of the movement of the material in the testing area 1.0 in said forward movement direction A) and on the force F exerted by said punch 2 on the material 1 during said movement D.

To obtain the load-movement curve, the load or force F exerted by the punch 2 on the material 1 is measured, preferably at all times during its movement D, and the fracture of the material 1 can be detected when it is detected that said force F drops, for example.

The deformation obtained in the testing area 1.0 of the material 1 during the determination step is proportional to the force F that is applied with the punch 2 on said testing area 1.0, and the greater the force, the greater the deformation. When a given deformation has been reached, the material 1 is not able to withstand the force F exerted by the punch 2 and ends up breaking (fracturing). The ratio between the exerted force F and the movement D obtained in the punch 2 (height of deformation) is characteristic to each case, with certain characteristic points such as the elastic limit Py and fracture limit Pmax (which occurs when the force F applied by the punch 2 reaches its maximum value Fmax) being recorded and providing valid information for correctly estimating the mechanical characteristics of the material 1.

Once the material 1 has fractured in the testing area 1.0, the punch 2 can be retracted to its position and said material 1 can be released (said material 1 is no longer secured).

In the method, the deformation step is executed once the load-movement curve of the material 1 to be deformed has been obtained, and said material 1 is deformed considering said previously determined load-movement curve. The load-movement curve is representative of the properties of the material 1 (of the mechanical characteristics of said material 1), so based on said curve, an estimation of the deformation the material 1 will sustain when said deformation is caused can be obtained. In particular, due to said estimation, the necessary deformation is applied on the material 1 in the deformation step so as to obtain the required deformation as a result.

In some embodiments of the method, after the deformation step for deforming the material 1, the deformation of the material 1 is measured to check that it is equal to the estimated and required deformation. To that end, said measured deformation is compared with a theoretical deformation which said material 1 would have to have depending on the load-movement curve (the estimated or expected deformation), and the result of said comparison is used for the determination of the load-movement curve in a later determination step. Therefore, in these embodiments the method implements a closed loop.

In some embodiments, the material 1 is supplied in format form. In these cases, said material 1 is generally deformed at least by means of a press forming, bending, or drawing process in the deformation step. In the case of a closed loop being implemented, said closed loop can be implemented for each of the formats or for just one of them.

In other embodiments, the material 1 to be deformed is wound in the form of a reel, said material 1 being supplied in a given feed direction X when it is unwound or taken off the reel in the supply step, said material 1 being deformed at least by means of a leveling, bending, or drawing process, for example. In the case of being implemented on a closed-loop basis, said closed loop can be implemented continuously or can be implemented periodically or occasionally with each reel of material 1.

Preferably, the determination step is performed with the material 1 being stationary, which facilitates the execution thereof. In the case of embodiments in which the material 1 to be deformed is wound in the form of a reel, the reel can be stopped every time the determination step is executed, or there can be a reservoir in which the part of the material that is unwound accumulates while the determination step is performed (in this case avoiding having to stop the reel, which likewise continues to operate despite the fact that the part of the material 1 object of the determination step is stationary).

Preferably, after the fracture of the material 1 in the determination step and preferably before the deformation step, in the method, the part of the testing area 1.0 of said material 1 that has been deformed during said determination step is physically separated from the rest of the material 1. This allows the result after the deformation step not to comprise undesired imperfections, and for the actuation on the material 1 performed during the determination step not to affect the final result. In some cases, the testing area 1.0 is furthermore caused to be located in an area of the material 1 which will subsequently be discarded (it is not part of the resulting product after the deformation step), so in these cases this described physical separation may not be needed.

In the case of the described physical separation being performed, said separation can be performed with said material 1 secured around the testing area 1.0 (as it is during the determination of the load-movement curve of said material 1), although depending on the force exerted on the material 1 for performing said physical separation, such separation may be performed without said securing (if the separation is performed, for example, by way of conventional punching).

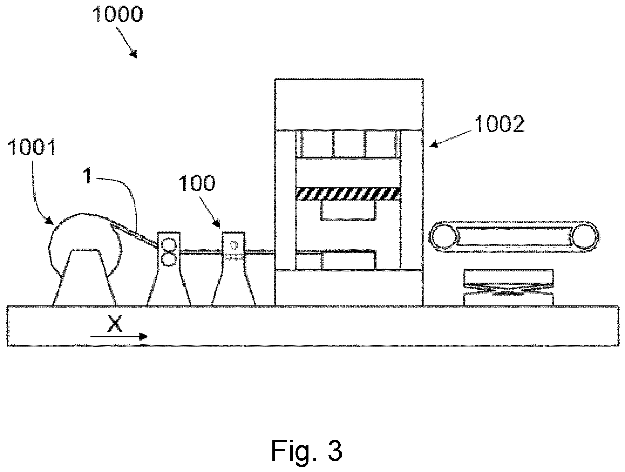

A second aspect of the invention relates to an installation 1000 for material deformation, such as the one shown by way of example in Figure 3. The installation 1000 comprises a feeder 1001 adapted for supplying the material 1 to be deformed, a deformation device 1002 adapted for deforming said material 1, and a control device (not depicted in the drawings) configured for controlling the actuation of the deformation device on said material 1.

In some embodiments, the material 1 is supplied in format form, with the feeder comprising, in these embodiments, conventional transport means for supplying the formats.

In other embodiments, as in the installation 1000 shown in Figure 3, the material 1 to be deformed is wound in the form of a reel, the feeder 1001 comprising an active shaft which, when actuated, causes the material 1 to be unwound and thus supplied in a supply direction X.

The installation 1000 further comprises a tool 100, schematically depicted in Figure 1, comprising a lower die 3 adapted for supporting the material 1, an upper die 4 facing the lower die 3, and a housed punch 2 that is movable at least with respect to the upper die 4 in an actuation direction A and comprising a longitudinal axis Y. The dies 3 and 4 are configured for being able to move such that they are moved closer to or farther apart from one another, in the actuation direction A and/or in the opposite direction, such that when they are moved closer together, they collaborate with one another and press the material 1 between them, keeping it secured in said position. Preferably the lower die 3 remains stationary, with the upper die 4 being the one configured for moving, with a corresponding actuator of the tool 100.

The control device is configured for causing the controlled movement of the punch 2 in the actuation direction A. The tool 100 of the installation 1000 can comprise an actuator (not depicted in the drawings) for causing the movement of the punch 2, and the control device is communicated with said actuator and configured for causing the controlled actuation of said actuator on the punch 2. The actuator can be a hydraulic cylinder, a servo-motor, or another type of known actuator.

Both dies 3 and 4 comprise a respective hole 3.0 and 4.0, and both holes are aligned in the actuation direction A. The material 1 thereby comprises a testing area 1.0 which coincides with said holes 3.0 and 4.0 and is free of the pinching of said dies 3 and 4 when both dies 3 and 4 cooperate with one another.

The punch 2 is arranged such that it is facing the testing area 1.0 of the material 1, at least when said material 1 is secured around said testing area 1.0, and is configured for moving along the inside of at least the hole 4.0 of the upper die 4, preferably along the inside of both holes 3.0 and 4.0. Thus when it moves in the forward movement direction A there comes a time when it contacts with said testing area 1.0 and therefore exerts a force F or load on said testing area 1.0. As it continues to move forward in the forward movement direction A, due to said force F exerted by the punch 2, which is increased, causes the deformation of the material 1 in said testing area 1.0 (deformation depicted in Figure 2), and if it continues to move forward it causes the fracture of said material 1 in said testing area 1.0 (a situation which is also depicted in Figure 2).

The control device is configured for determining a load-movement curve of said material 1 during the actuation of the punch 2 on the testing area 1.0 of said material 1, being configured for causing the forward movement of the punch 2 until causing at least the fracture of said material 1 in said testing area 1.0 to enable determining the load-movement curve of said material 1 in its entirety. Furthermore, the control device is also configured for causing the deformation device 1002 to subsequently deform said material 1, depending on said determined load-movement curve.

The installation 100 can further comprise a detection device, not depicted in the drawings, which is configured for detecting the deformation of the material 1 once the deformation device 1002 has performed said deformation. In some embodiments of the installation 1000, the deformation device 1002 can comprise, for example, a bending press, with the bending carried out on said material 1 being detected or measured. In other embodiments of the installation 1000, the deformation device 1002 can comprise, for example, a leveler, with the leveling carried out on said material 1 being detected or measured.

In these cases, the control device is communicated with the detection device and is configured to enable determining (and adjusting) a new load-movement curve further considering the detection performed, as described above for the method of the invention.

The punch 2 comprises a head 2.0 which is what acts on the testing area 1.0 of the material 1 when said punch 2 acts on said testing area 1.0. Preferably the head 2.0 is semispherical, which allows performing a more controlled actuation, since said configuration allows the testing area 1.0 to gradually deform without abrupt contrasts (except, in any case, when it fractures).

Preferably, the punch 2 further comprises a surface with a cutting edge 2.1 upstream of the head 2.0 with respect to the forward movement direction A, projecting around said head 2.0 (in a direction transverse to the longitudinal axis Y), said cutting edge 2.1 being configured for physically separating the part of the material 1 of the testing area 1.0 which has been deformed as a consequence of the actuation of the head 2.0, from the rest of the material 1, when said cutting edge 2.1 acts on the testing area 1.0 of the material 1. In this manner, as previously described, the testing area 1.0 simply comprises a hole and does not comprise any discarded amount that may affect the final result. Preferably the cutting edge 2.1 is arranged such that it acts on the material 1 once the latter has fractured, with the control device being configured for causing the movement of the punch 2 in the forward movement direction at least until the cutting edge 2.1 performs the described physical separation.

Preferably, the punch 2 is formed by at least two parts, a first part 2.8 comprising the head 2.0 and a second part 2.9 comprising the cutting edge 2.1. The head 2.0 and the cutting edge 2.1 are the two parts of the punch 2 which act on the testing area 1.0 of the material 1 and which are therefore exposed to wear. Since the manner and time of actuation of the head 2.0 and cutting edge 2.1 is different, the wear they may sustain is also different. With a punch 2 formed by at least the two parts 2.8 and 2.9, the worn part 2.8 and 2.9 can be replaced without having to replace the other part 2.8 and 2.9 if it is not worn, which results in a maintenance of the punch 2 which is at least more economical.

When the punch 2 is formed by at least two parts 2.8 and 2.9 as described in the preceding paragraph, at least one of the parts 2.8 and 2.9 can move with respect to the other part 2.8 and 2.9, such that once the required physical separation has been performed, said relative movement enables the material that may have adhered to the punch 2 during said separation to be released from said punch 2.

In some embodiments, the tool 100 is arranged such that it is facing part of the material 1 to be discarded (which will not be part of the resulting end product), so in these cases this described physical separation may not be needed.

The installation 1000 can be adapted to implement the method according to the invention, in any of its embodiments and/or configurations. Thus the installation 1000 can comprise different configurations and/or embodiments, comprising a configuration or embodiment adapted to implement the corresponding embodiment and/or configuration of the method. What has been discussed for the method is therefore also valid for the corresponding configuration and/or embodiment of the installation 1000, even if it has not been explicitly described for said installation 1000.

Likewise, the method of the invention can be adapted to be implemented in an installation 1000 according to the invention, in any of its embodiments and/or configurations. Thus the method can comprise different configurations and/or embodiments, comprising a configuration or embodiment adapted to be implemented in the corresponding embodiment and/or configuration of the installation 1000. What has been discussed for the installation 1000 is therefore also valid for the corresponding configuration and/or embodiment of the method, even if it has not been explicitly described for said method.

## Claims

1. Method for material deformation, the method comprising a supply step in which the material (1) to be deformed is supplied and a deformation step in which said material (1) is deformed, **characterized in that** the method further comprises a determination step prior to the deformation step, in which upper and lower securing of the supplied material (1) around a testing area (1.0) of said material (1) is performed; a punch (2) is moved in a controlled manner in an actuation direction (A) towards the testing area (1.0), such that said punch (2) exerts a force (F) or load on said testing area (1.0) as it continues to move in said actuation direction (A) once it contacts with said testing area (1.0), and deforms at least part of said testing area (1.0), said movement (D) of the punch (2) being caused at least until the material (1) fractures in said testing area (1.0); and a load-movement curve of said material (1) from the time the punch (2) contacts with the material in the testing area (1.0) until said material fractures is determined, depending on the movement (D) of said punch (2) in the forward movement direction (A) and on the force (F) exerted by said punch (2) on the material (1) during said movement (D); the deformation step being performed once the load-movement curve of said material (1) has been obtained and said material (1) being deformed, in said deformation step, considering said load-movement curve.

2. Method according to claim 1, wherein after the deformation step for deforming the material (1), the deformation of said material (1) is measured and said measured deformation is compared with a theoretical deformation which said material (1) would have to have depending on the previously determined load-movement curve, the load-movement curve determined in a later determination step depending on the result of said comparison being adjusted.

3. Method according to claim 1 or 2, wherein the determination step is performed with the testing area (1.0) of the material (1) being stationary.

4. Method according to any of claims 1 to 3, wherein after the fracture of the material (1) in the determination step, the deformed part of the testing area (1.0) of said material (1) during said determination step is physically separated from the rest of the material (1).

5. Method according to claim 4, wherein the physical separation of the deformed part of the testing area (1.0) of the material (1) during the determination step from the rest of the material (1) is performed with said material (1) secured around the testing area (1.0).

6. Method according to any of claims 1 to 5, wherein after the fracture of the material (1), the punch (2) is retracted to its original position and said material (1) around the testing area (1) is released.

7. Method according to any of claims 1 to 6, wherein in the supply step, the material (1) is supplied in format form, said material (1) being deformed at least by means of a press forming, bending, or drawing process in the deformation step.

8. Method according to any of claims 1 to 6, wherein the material (1) to be deformed is wound in the form of a reel, said material (1) being supplied in a given feed direction (X) when it is unwound in the supply step, said material (1) being deformed at least by means of a leveling, bending, or drawing process in the deformation step.

9. Method according to any of claims 1 to 8, wherein the punch (2) acts on a part of the material (1) that is subsequently discarded.

10. Installation for material deformation, comprising a feeder (1001) adapted for supplying the material (1) to be deformed, a deformation device (1002) adapted for deforming said material (1), and a control device configured for controlling the actuation of the deformation device on said material (1), **characterized in that** the installation (1000) further comprises a tool (100) which comprises a lower die (3) adapted for supporting the material (1); a lower die (4) facing lower die (3), at least one of the dies (3, 4) being configured for moving towards the other die (3, 4) so as to collaborate with said other die (3, 4) and keep the material (1) secured as a result of said collaboration; and a punch (2) that is movable with respect to at least the upper die (4) in an actuation direction (A); the control device being configured for causing the controlled movement of the punch (2) in said actuation direction (A), both dies (3, 4) comprising a respective hole (3.0, 4.0), which holes are aligned in the actuation direction (A), such that the material (1) comprises a testing area (1.0) which coincides with said holes (3.0, 4.0) and is free of the pinching of said dies (3, 4) when both dies (3, 4) cooperate with one another, the punch (2) being configured for moving along the inside of at least one of said holes (3.0, 4.0) of the dies (3, 4) towards the testing area (1.0) of the material (1), such that it exerts a force (F) or load on said testing area (1.0) of said material (1) as it continues to move in said actuation direction (A) once it contacts with said testing area (1.0), and the control device further being configured for causing the forward movement of the punch (2) until causing at least the fracture of said material (1) in said testing area (1.0) as a result of the actuation of said punch (2) on said testing area (1.0), for determining a load-movement curve of said material (1) during said actuation of said punch (2), and for causing the deformation device (1002) to deform said material (1) depending on said determined load-movement curve.

11. Installation according to claim 10, comprising a detection device configured for detecting the deformation of the material (1) performed by the deformation device (1002), the control device being communicated with said detection device and configured for comparing said measured deformation with a theoretical deformation which said material (1) would have to have depending on the previously determined load-movement curve, and for adjusting the later determined load-movement curve depending on the result of said comparison.

12. Installation according to claim 10 or 11, wherein the punch (2) comprises a head (2.0), preferably semispherical, which is what acts on the testing area (1.0) of the material (1) when said punch (2) acts on said testing area (1.0).

13. Installation according to claim 12, wherein the punch (2) comprises a surface with a cutting edge (2.1) upstream of the head (2.0) with respect to the forward movement direction (A), said cutting edge (2.1) being configured for physically separating the part of the material (1) of the testing area (1.0) which has been deformed as a consequence of the actuation of the head (2.0), from the rest of the material (1), when said cutting edge (2.1) acts on said testing area (1.0).

14. Installation according to claim 13, wherein the punch (2) is formed by at least two parts (2.8, 2.9), a first part (2.8) comprising the head (2.0) and a second part (2.9) comprising the cutting edge (2.1).

15. Installation according to claim 14, wherein at least one of the parts (2.8, 2.9) of the punch (2) is movable with respect to the other part (2.8, 2.9) of said punch (2) along a longitudinal axis (Y) of said punch (2).
